Europäisches Patentamt

European Patent Office

Office européen des brevets

(19)

(11) Veröffentlichungsnummer: **0 161 528**
**A1**

(12) **EUROPÄISCHE PATENTANMELDUNG**

(21) Anmeldenummer: **85104745.6**

(22) Anmeldetag: **19.04.85**

(51) Int. Cl.⁴: **A 47 J 31/50,** A 47 J 41/00, A 47 J 27/00

(30) Priorität: **21.04.84 DE 3415166**

(43) Veröffentlichungstag der Anmeldung: **21.11.85** **Patentblatt 85/47**

(84) Benannte Vertragsstaaten: **DE FR GB IT NL**

(71) Anmelder: **Braun Aktiengesellschaft, Rüsselsheimer Strasse 22, D-6000 Frankfurt/Main (DE)**

(72) Erfinder: **Wunder, Dieter, Kirchstrasse 9, D-6131 Reichelsheim 6 (DE)** Erfinder: **Schindler, Hans, Messeler Strasse 2, D-6073 Egelsbach (DE)**

(74) Vertreter: **Einsele, Rolf, Braun Aktiengesellschaft Postfach 1120 Frankfurter Strasse 145, D-6242 Kronberg Taunus (DE)**

(54) **Warmhaltekanne für heisse Getränke.**

(57) Bei einer Warmhaltekanne (1) für heisse Getränke sind nur die Seitenwandung (2) und gegebenenfalls der Deckel (9) wärmeisolierend ausgeführt, während ihr Boden (3) un-isoliert und wärmeleitend ist, so daß sie sich nicht nur zum Warmhalten, sondern auch zum Erwärmen von Getränken auf einer Heizplatte eignet.

EP 0 161 528 A1

Die Erfindung betrifft eine Warmhaltekanne mit wärmeisolierender Wandung, in der heiße Getränke längere Zeit aufbewahrt werden können, ohne wesentlich abzukühlen.

Derartige Kannen sind in zahlreichen Ausführungsformen bekannt. Am meisten sind sogenannte Thermoskannen verbreitet, die innerhalb eines stabilen Außenbehälters einen Glasbehälter mit evakuierter Doppelwandung enthalten und deren Einfüllöffnung mittels eines wärmeisolierenden Deckels verschließbar ist. Außerdem gibt es bereits Warmhaltekannen, deren Wandung aus wärmeisolierenden Kunststoffschichten bestehen oder von solchen Schichten umgeben sind. Als isolierende Kunststoffmaterialen werden insbesondere Kunststoffschäume als geschlossene Schichten oder in Form von Schaumstoffteilchen verwendet.

Mit diesen bekannten Warmhaltekannen läßt sich die Abkühlung der in ihnen aufbewahrten Getränke zwar wirksam verzögern, eine laufende oder spätere Erwärmung auf einer Heizplatte ist jedoch mit ihnen nicht möglich, da ihre allseitig geschlossene Isolierschicht nicht nur die Wärmeabstrahlung, sondern umgekehrt auch jegliche Wärmezufuhr verhindert.

Es sind daher auch Warmhaltekannen bekanntgeworden, in denen Getränke sowohl über längere Zeit heißbleibend aufbewahrt als auch erhitzt werden können. Beispielsweise beschreiben die DE-A-2 824 653 und die DE-A-3 108 638 solche Kannen, die einen Kunststoffmantel und einen an diesen angesetzten Metallboden aufweisen, und aus der DE-U-7 427 619 ist eine Kaffeekanne bekannt, die aus einem oben offenen zylindrischen Glasgefäß und einem nur dessen Seitenwandung, nicht jedoch dessen Boden umgebenden wärmeisolierenden Mantel besteht.

Ein wesentlicher Nachteil dieser bekannten Warmhaltekannen zeigt sich dann, wenn sie nicht auf einer Heiz- oder Warmhalteplatte,

...

BRAUN

Braun Aktiengesellschaft 0161528
05163-PT5/Do
17.04.1985

sondern auf einer kühlen Standfläche - beispielsweise auf einer Tischplatte - abgestellt werden. Dann kühlt nämlich der Kanneninhalt durch den unmittelbaren Wärmekontakt des unisolierten Kannenbodens mit der Standfläche sehr schnell ab.

Der vorliegenden Erfindung liegt daher die Aufgabe zugrunde, eine Warmhaltekanne zu schaffen, die einerseits die Wärmeübertragung von einer Warmhalteplatte auf den Kanneninhalt ermöglicht und die andererseits die Abkühlung des Kanneninhalts wirksam verzögert, wenn sie nicht auf einer heißen Warmhalteplatte, sondern auf einer kühlen Standfläche abgestellt ist. Diese scheinbar unvereinbaren Forderungen sind insbesondere bei den in elektrischen Brühgetränkebereitern eingesetzten Kannen von Bedeutung; denn deren Inhalt soll während seiner Zubereitung schwach nachgeheizt und anschließend über längere Zeit mit möglichst geringer Abkühlung auch außerhalb des Gerätes aufbewahrt werden können.

Zur Lösung der genannten Aufgabe wird erfindungsgemäß eine Warmhaltekanne vorgeschlagen, deren wärmeisolierender Mantel den Gefäßboden nach unten überragt, und zwar vorzugsweise um bis zu 10 mm. Hierdurch wird zwischen dem Kannenboden und der Aufstandsfläche der Kanne ein wärmeisolierendes Luftpolster geschaffen, dessen Wirkung sich als optimal erwiesen hat, wenn es 2,5 bis 3,5 mm stark ist. Der den Kannenboden nach unten überragende Teil der Seitenwandung kann insbesondere so gestaltet werden, daß er die Umfangskante des Bodens radial umgreift. Allerdings setzt diese Ausführungsform voraus, daß die verwendete Warmhalteplatte so dimensioniert und so erhaben auf dem zugehörigen Gerätesockel angeordnet ist, daß ihre Oberfläche an den unisolierten Kannenboden heranreicht. Dies kann erfindungsgemäß dadurch umgangen werden, daß der den Boden nach unten überragende Teil der Seitenwandung als ein am oberen Teil der Seitenwandung lösbar befestigter Ringkörper ausgebildet ist, der abgenommen werden kann, wenn die Kanne auf die Warmhalteplatte gestellt wird.

...

In bevorzugten Ausführungsformen der Erfindung besteht der wärmeisolierende Kannenmantel aus einer von einer verschleißfesten, steifen Außenschicht umschlossenen Kunststoffschaum-Schicht, die insbesondere durch Ausschäumen oder durch Einbringen von Schaumstoffteilchen - wie z.B. Schaumstoffkügelchen, vorzugsweise sogenannten Mikrohohlkugeln - erzeugt wird.

Die Ausstattung der erfindungsgemäßen Warmhaltekanne wird durch einen wärmeisolierenden Deckel abgerundet. Vorzugsweise ist dieser mittels zusammenwirkender Schnapp- oder Rastelemente am Kannen- und Deckelrand auf der Kanne arretierbar. Zu diesem Zweck besitzt er in einer bevorzugten Ausführungsform in seinem vorderen Randbereich eine die Kannenzotte ganz oder teilweise umgreifende Öffnung, mit der er beim Auflegen zunächst an der Kannenzotte eingehängt werden kann, und an seinem rückwärtigen Teil trägt er Rastelemente, die mit entsprechenden Gegenrastungen am hinteren Kannenrand korrespondieren und ihn sicher aber lösbar fixieren. Das Abheben des Deckels durch Auslenken der Rastelemente kann dadurch erleichtert werden, daß der Deckelrand - zumindest bereichsweise - radial und/oder in Umfangsrichtung elastisch verformbar ist, was vorzugsweise dadurch erreicht wird, daß er Einschnitte und/oder in Umfangsrichtung gewellte reckbare Bereiche aufweist.

In einer weiteren, durch ihren Gebrauchswert besonders vorteilhaften Ausführungsform der Erfindung, wird die seitliche isolierende Wandung der Warmhaltekanne oben durch einen umlaufenden, radial nach innen überkragenden, etwa horizontalen Rand abgeschlossen, auf dem der Deckel aufliegt und in den die Zottenöffnung eingeformt ist. Ergänzend hierzu ist es zweckmäßig, den Deckel an seiner Unterseite mit - vorzugsweise angeformten - Dichtlippen auszurüsten, mit denen er flüssigkeitsdicht auf dem besagten, etwa horizontalen Kannenrand aufliegt.

...

BRAUN

Braun Aktiengesellschaft

0161528

05163-PT5/Do
17.04.1985

Zur Verwendung der erfindungsgemäßen Warmhaltekanne in Kaffeemaschinen besitzt der Deckel - wie bei Kaffeemaschinenkannen
üblich - eine in einer zentralen Mulde angeordnete Zulauföffnung
in Form eines kreisrunden senkrechten Loches. Dieses Loch besitzt
vorteilhaft einen lichten Durchmesser von 3 bis 5 mm, wodurch
einerseits erreicht wird, daß der aus dem Kaffeefilter ausfließende und sich in der Deckelmulde sammelnde Kaffee in ausreichendem Maße in die Kaffeekanne abfließt, daß jedoch andererseits infolge der Oberflächenspannung des Kaffees und seiner Benetzung
der Wandung der Zulauföffnung am Ende des Brühvorganges immer ein
Kaffeetropfen in der Zulauföffnung hängenbleibt und diese verschließt, so daß eine den Kanneninhalt abkühlende Luftzirkulation
unterbunden wird.

Die im wesentlichen senkrechte Wandung der Zulauföffnung bildet
mit dem sie umgebenden Teil der Deckelunterseite scharfkantig
- einen vorzugsweise spitzen Winkel - was zu definierten Abreißbedingungen für den durchlaufenden Kaffeestrahl führt und außerdem bewirkt, daß - falls der vorstehend erwähnte letzte Kaffeetropfen abfällt - sich an seiner Stelle ein Wassertropfen bildet,
der aus dem an der Deckelunterseite kondensierenden Wasserdampf
zusammenfließt, welcher aus dem heißen Kaffee aufsteigt.

Die Zeichnung veranschaulicht die Erfindung anhand stark schematisiert wiedergegebener vorteilhafter Ausführungsformen:

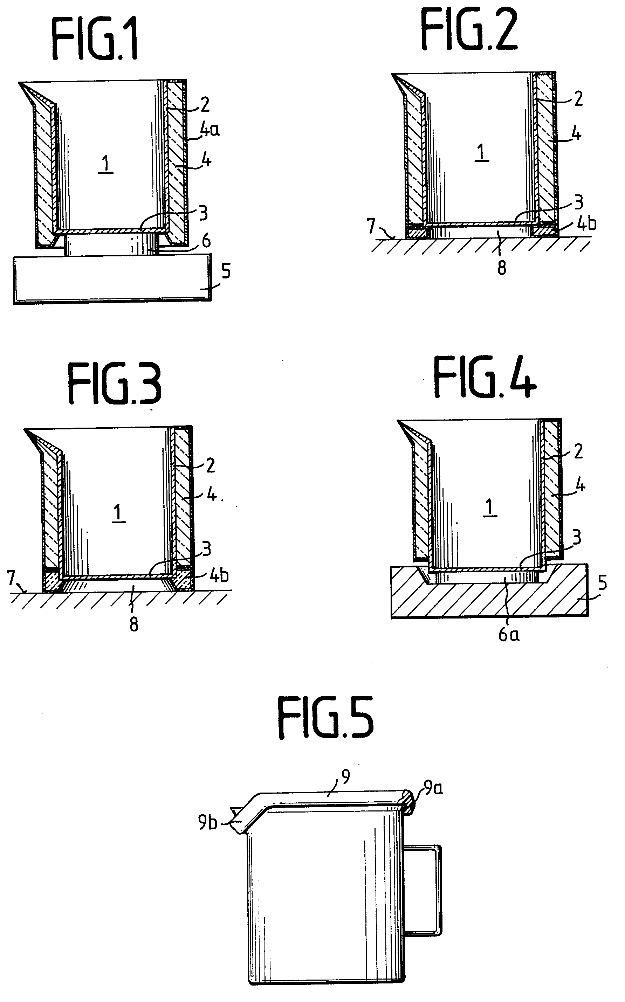

Wie Figur 1 zeigt, enthält die erfindungsgemäße Warmhaltekanne
ein vollständig aus wärmeleitendem Material bestehendes Gefäß 1,
bei dem also sowohl die Seitenwand 2 als auch der Boden 3 aus
einem wärmeleitenden Werkstoff bestehen. Als wärmeleitende
Materialien kommen Glas, Metall, Keramikwerkstoffe oder auch
hitzebeständige Kunststoffe in Betracht.

...

BRAUN

Braun Aktiengesellschaft
05163-PT5/Do
17.04.1985

0161528

Die Seitenwand 2 ist von einem wärmeisolierenden Mantel 4 umgeben, der beispielsweise aus einer Kunststoffschaum-Schicht und einer diese umgebenden verschleißfesten, steifen Außenschicht 4a bestehen kann.

Dadurch, daß der wärmeisolierende Mantel 4 den Gefäßboden 3 erfindungsgemäß nach unten überragt, wobei er den Boden 3 an dessen Umfangskante vorzugsweise radial umgreift, entsteht beim Abstellen der Warmhaltekanne auf einer Standfläche 7 zwischen dem Kannenboden 3 und der Standfläche - wie bereits erläutert - ein wärmeisolierendes Luftpolster 8.

Während der den Boden nach unten überragende Mantelteil bei der in Figur 1 dargestellten Ausführungsform als einteilige Fortsetzung des übrigen Mantels 4 ausgebildet ist, zeigen ihn die Figuren 2 und 3 als lösbar befestigten Ringkörper 4b. Wie Figur 4 zeigt, kann die Ausführungsform gemäß Figur 3 durch Abnehmen des Ringes 4b so abgewandelt werden, daß sie auch auf Kaffeemaschinen verwendet werden kann, deren Warmhalteplatte 6a einen erhabenen Rand besitzt oder abgesenkt in den sie umgebenden Gerätesockel 5 eingelassen ist.

Ein für die Warmhaltekannen gemäß der vorliegenden Erfindung bezüglich der Isolierwirkung und der Handhabung besonders vorteilhafter Deckel ist in Figur 5 angedeutet. Wie die stark vereinfachte Darstellung erkennen läßt, besitzt der Deckel 9 an seiner Vorderseite eine Öffnung, mittels deren die Kannenzotte umgreifenden Randes 9b er an dieser Zotte eingehängt ist, während der rückwärtige Deckelrand mittels eines oder mehrerer elastisch auslenkbarer Rastelemente 9a an entsprechenden Gegenrastungen am Kannenrand arretierbar ist.

Zur Verwendung der erfindungsgemäßen Warmhaltekanne in einer Kaffeemaschine weist der Deckel 9 eine in der Zeichnung nicht

...

BRAUN

Braun Aktiengesellschaft
0161528
05163-PT5/Do
17.04.1985

wiedergegebene, insbesondere in einer zentralen Mulde angeordnete Kaffee-Zulauföffnung auf, die - wie weiter oben bereits erwähnt - als kreisrundes senkrechtes Loch mit einem lichten Durchmesser von vorzugsweise 3 bis 5 mm ausgebildet ist und deren senkrechte Wandung mit dem das Loch umgebenden Teil der Deckelunterseite scharfkantig einen vorzugsweise spitzen Winkel bildet.

Die Erfindung eröffnet eine Reihe vorteilhafter Gestaltungsmöglichkeiten, die die Warmhaltekannen insbesondere für den Einsatz in elektrischen Kaffeemaschinen geeignet machen. In den heute üblichen Kaffeemaschinen steht die Kaffeekanne - im allgemeinen in Form einer Glaskanne - auf einer Warmhalteplatte, die dafür sorgt, daß der frisch zubereitete Kaffee während des Brühvorganges und anschließend bis zum Ausschenken heiß bleibt. Mit einer Warmhaltekanne gemäß der Erfindung kann nun nicht nur der Heizeffekt der Warmhalteplatte wie bisher genutzt werden, sondern die Kannenisolierung verhindert das Auskühlen des Kaffees auch dann, wenn die Warmhalteplatte ausgeschaltet ist oder die Kanne außerhalb der Kaffeemaschine, beispielsweise auf dem Tisch, abgestellt wird.

...

BRHun
Braun Aktiengesellschaft
0161528
05163-PT5/Do
17.04.1985

Patentansprüche

1. Warmhaltekanne für heiße Getränke, die aus einem nach oben offenen Gefäß (1) mit durchgehend wärmeleitender, hitzebeständiger Boden- und Seitenwandung und einem nur die Seitenwandung (2) nicht aber den Boden (3) des Gefäßes umgebenden wärmeisolierenden Mantel (4) besteht, dadurch gekennzeichnet, daß der wärmeisolierende Mantel (4) den Boden (3) des Gefäßes (1) nach unten überragt.

2. Warmhaltekanne nach Anspruch 1, dadurch gekennzeichnet, daß der Mantel (4) den Boden (3) um bis zu 10 mm nach unten überragt.

3. Warmhaltekanne nach Anspruch 2, dadurch gekennzeichnet, daß der Mantel (4) den Boden (3) um 2,5 bis 3,5 mm nach unten überragt.

4. Warmhaltekanne nach einem der Ansprüche 1 bis 3, dadurch gekennzeichnet, daß der den Boden (3) nach unten überragende Teil des Mantels (4) den Boden (3) an dessen Umfangskante radial umgreift.

5. Warmhaltekanne nach einem der Ansprüche 1 bis 4, dadurch gekennzeichnet, daß der den Boden (3) nach unten überragende Teil des wärmeisolierenden Mantels (4) als ein an dessen oberem Teil befestigter Ringkörper (4b) ausgebildet ist.

6. Warmhaltekanne nach einem der Ansprüche 1 bis 5, dadurch gekennzeichnet, daß der wärmeisolierende Mantel (4) eine zwischen einer verschleißfesten, steifen Außenschicht (4a) und der Seitenwand (2) des Gefäßes (1) angeordnete Kunststoffschaum-Schicht aufweist.

...

BRHUN

Braun Aktiengesellschaft
0161528
05163-PT5/Do
17.04.1985

7. Warmhaltekanne nach Anspruch 6, <u>dadurch gekennzeichnet</u>, daß der Zwischenraum zwischen der steifen Außenschicht (4a) und der Seitenwand (2) des Gefäßes (1) mit einem Kunststoffschaum ausgeschäumt ist.

8. Warmhaltekanne nach Anspruch 6, <u>dadurch gekennzeichnet</u>, daß die Kunststoffschaum-Schicht aus z.B. kugelförmigen Schaumstoffteilchen, insbesondere sogenannten Mikrohohlkugeln, besteht.

9. Warmhaltekanne nach einem der Ansprüche 1 bis 8, <u>dadurch gekennzeichnet</u>, daß sie mit einem vorzugsweise wärmeisolierenden Deckel (9) ausgestattet ist und einen Henkel und - diesem gegenüberliegend - eine Zotte aufweist und daß der Deckel mittels einer in den Deckelrand eingeformten Öffnung, deren Rand (9b) die Zotte ganz oder teilweise umgreift, sowie oberhalb des Henkels am Deckelrand angeordneter Rastelemente (9a) auf der Kanne arretierbar ist.

10. Warmhaltekanne nach Anspruch 9, <u>dadurch gekennzeichnet</u>, daß der Deckelrand, zumindest bereichsweise, radial und/oder in Umfangsrichtung elastisch verformbar ist.

11. Warmhaltekanne nach Anspruch 10, <u>dadurch gekennzeichnet</u>, daß der Deckelrand zur Erzielung der Verformbarkeit Einschnitte und/oder in Umfangsrichtung gewellte reckbare Bereiche aufweist.

12. Warmhaltekanne nach einem der Ansprüche 9 bis 11, <u>dadurch gekennzeichnet</u>, daß ihre seitliche isolierende Wandung oben durch einen umlaufenden, radial nach innen überkragenden, etwa horizontalen Rand abgeschlossen wird, auf dem der Deckel aufliegt und in den die Zottenöffnung eingeformt ist.

...

BRAUN

Braun Aktiengesellschaft

0161528

05163-PT5/Do
17.04.1985

13. Warmhaltekanne nach einem der Ansprüche 9 bis 12, dadurch gekennzeichnet, daß der Deckel eine in einer, insbesondere zentralen, Mulde angeordnete Zulauföffnung in Form eines kreisrunden senkrechten Loches mit einem lichten Durchmesser von 3 bis 5 mm aufweist.

14. Warmhaltekanne nach Anspruch 13, dadurch gekennzeichnet, daß die im wesentlichen senkrechte Wandung der Zulauföffnung mit der sie umgebenden Unterseite des Deckels scharfkantig einen spitzen Winkel bildet.

...

0161528

# FIG.1

2
4a
4
1
3
6
5

# FIG.2

2
4
1
3
4b
7
8

# FIG.3

2
4
1
3
4b
7
8

# FIG.4

2
4
1
3
5
6a

# FIG.5

9
9a
9b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-7 600 611 (ALBRECHT) <br> * Seite 3, Absatz 2; Figur 3; Ansprüche 1,4,5 * | 1 | A 47 J 31/50 <br> A 47 J 41/00 <br> A 47 J 27/00 |
| | --- | | |
| X | DE-C- 295 168 (HOFFMANN) <br> * Figur 1 * | 1,4 | |
| | --- | | |
| X | GB-A-2 105 575 (MURRAY) <br> * Insgesamt * | 1,4 | |
| | ----- | | |

RECHERCHIERTE SACHGEBIETE (Int. Cl.4)

A 47 J
A 47 G

Der vorliegende Recherchenbericht wurde für alle Patentansprüche erstellt.

| Recherchenort <br> DEN HAAG | Abschlußdatum der Recherche <br> 29-07-1985 | Prüfer <br> SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82